# FASCICULE DE BREVET EUROPEEN

(11) **EP 2 946 076 B1**
(45) Date de publication et mention de la délivrance du brevet: **09.06.2021**
(21) Numéro de dépôt: 14701807.1
(22) Date de dépôt: 06.01.2014
(51) Int. Cl.: F01D 5/02

(54) **DISPOSITIF ET PROCÉDÉ D'ÉQUILIBRAGE POUR UNE PIÈCE TOURNANTE DE TURBOMACHINE**
VORRICHTUNG UND VERFAHREN ZUM AUSWUCHTEN EINES DREHENDEN TEILS EINER STRÖMUNGSMASCHINE
DEVICE AND METHOD FOR BALANCING A ROTATING PART OF A TURBOMACHINE

(30) Priorité: 18.01.2013 FR 1350428
(43) Date de publication de la demande: 25.11.2015
(73) Titulaire: Safran Aircraft Engines, 75015 Paris (FR)
(72) Inventeur: LE STRAT, Jean-Luc, 91240 Saint Michel sur Orge (FR); POHIER, Hervé, 94510 La Queue en Brie (FR); THORY, Romain, Jean-Louis, Robert, 77590 Fontaine Le Port (FR)
(74) Mandataire: Camus, Olivier Jean-Claude
(86) Numéro de dépôt international: PCT/FR2014/050005
(87) Numéro de publication internationale: WO 2014/111641

(56) Documents cités:
- EP-A1- 1 808 573
- WO-A1-01/27479
- WO-A1-01/49459
- DE-A1- 3 532 929
- DE-U1- 20 202 624
- FR-A- 1 271 525
- FR-A1- 2 920 187
- FR-A1- 2 953 896
- FR-A1- 2 977 029
- FR-E- 78 328
- FR-E- 91 601
- US-A- 2 385 252
- US-A- 3 556 533
- US-A- 5 487 640

## Description

### DOMAINE TECHNIQUE

La présente invention concerne un dispositif d'équilibrage pour une pièce tournante de turbomachine, ainsi qu'un procédé d'équilibrage d'une pièce tournante de turbomachine pourvue d'un tel dispositif d'équilibrage.

### ETAT DE LA TECHNIQUE ANTERIEUR

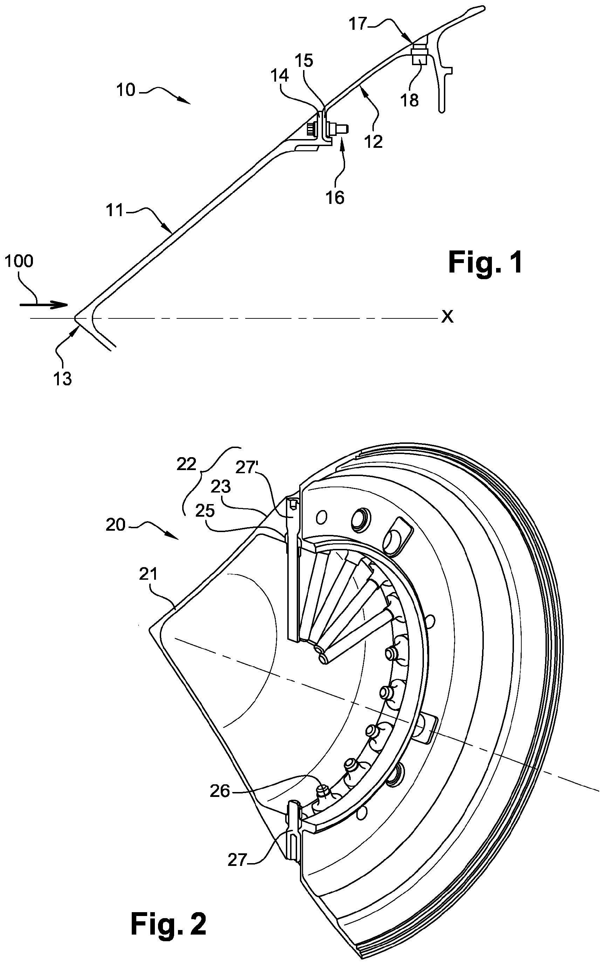

Un capot d'entrée 10 tournant de turbomachine d'aéronef comporte généralement deux parties fixées l'une à l'autre, comme représenté à la figure 1 :
- une partie avant en forme de cône, appelée cône avant 11. Le cône avant 11 présente une extrémité avant 13 en forme de pointe de cône centrée sur un axe de rotation X du capot d'entrée 10, correspondant également à un axe longitudinal de l'ensemble de la turbomachine. Le cône avant 11 présente également une extrémité arrière 14 s'étendant radialement par rapport à l'axe X selon une forme annulaire.
- une partie arrière, appelée virole arrière 12, s'étendant selon l'axe longitudinal X de la turbomachine et prolongeant le cône avant 11. La virole arrière 12 présente une extrémité avant 15 s'étendant radialement par rapport à l'axe X selon une forme annulaire. De façon classique, le cône avant 11 et la virole arrière 12 sont fixés par des boulons 16 traversant d'avant en arrière l'extrémité arrière 14 du cône avant 11 et l'extrémité avant 15 de la virole arrière 12.

On note que les termes « avant » et « arrière » sont à considérer par rapport à une direction générale d'écoulement de fluides à travers la turbomachine, allant de l'avant vers l'arrière comme cela est représenté schématiquement par une flèche 100.

De manière connue, la turbomachine comporte des modules dits majeurs, euxmêmes comportant des modules dits mineurs. Cette répartition en modules permet un système d'assemblage aisé par sous-éléments, mais également une répartition des balourds par équilibrage modulaire. En effet, chaque module mineur tournant est équilibré en dynamique afin de réduire son balourd et ainsi limiter les impacts sur le moteur une fois que celui-ci est assemblé. Un balourd est une masse parasite entrainant un déséquilibre d'une pièce tournante.

Puis, une fois assemblé, la turbomachine est elle-même équilibrée. Classiquement, la virole arrière 12 dispose de trente-six trous 17 répartis sur sa périphérie, dans lesquels sont sertis des écrous 18. Les écrous sertis 18 sont aptes à recevoir des vis dites d'équilibrage permettant de limiter le balourd global de la turbomachine. En effet, en choisissant judicieusement les poids des vis d'équilibrage à visser dans les écrous 18, on équilibre la turbomachine.

Toutefois, dans les petits moteurs, la fonction d'équilibrage moteur par implantation de vis d'équilibrage de longueurs et de masses différentes est difficile à réaliser. En effet, dans les petits moteurs, le cône avant est de petit diamètre de sorte que le centre de gravité des vis se trouve alors très proche de l'axe moteur ce qui diminue leur capacité d'équilibrage totale. En outre, le diamètre et l'environnement réduit oblige à réduire le nombre de vis utilisées et à prendre des vis avec un petit diamètre fileté, ce qui conduit à une diminution de la masse totale des vis, et donc de la capacité d'équilibrage totale. En outre, dans les petits moteurs, les vis d'équilibrage alourdissent la turbomachine.

FR 2920187 A1 divulgue un dispositif d'équilibrage pour une pièce tournante de turbomachine selon l'art antérieur.

US 2385252 divulgue un dispositif d'équilibrage pour une pièce tournante selon le préambule de la revendication 1.

### EXPOSE DE L'INVENTION

L'invention vise à remédier aux inconvénients de l'état de la technique en proposant une vis d'équilibrage pour dispositif d'équilibrage qui permette au dispositif d'équilibrage d'être utilisé dans les petits moteurs, qui soit optimisée en masse par rapport à celle de l'art antérieur.

Pour ce faire, est proposé selon un premier aspect de l'invention, un dispositif d'équilibrage pour une pièce tournante de turbomachine selon la revendication 1.

Le fait d'avoir un évidement additionnel qui prolonge axialement l'empreinte de serrage permet d'avoir une vis d'équilibrage plus légère. En effet, on peut ainsi diminuer la masse des vis sans modifier leurs dimensions extérieures, ce qui est avantageux car tous les orifices de la virole destinés à recevoir des vis doivent obligatoirement être obstrués par des vis même si certaines de ces vis ne sont pas utiles pour l'équilibrage, car ces orifices débouchent dans la veine. Par conséquent, il est avantageux d'avoir des vis de masse faible pour ne pas trop alourdir la turbomachine. Dans ce cas, la tête de serrage est percée par un évidement formé par l'empreinte de serrage et par un évidement additionnel qui prolonge l'empreinte de serrage. L'évidement additionnel présente de préférence une forme cylindrique de façon à faciliter sa fabrication. En outre, l'évidement additionnel présente de préférence des dimensions inférieures à celles de l'empreinte de serrage de façon à ce qu'une clé de serrage insérée dans l'empreinte de serrage puisse venir en butée au fond de l'empreinte de serrage, à la limite avec l'évidement additionnel.

Le fait d'avoir un dispositif d'équilibrage dans lequel on fait varier la profondeur de l'évidement des têtes de vis de façon à compenser le balourd permet d'avoir plus de possibilités pour équilibrer la turbomachine, y compris lorsqu'elle présente des petites dimensions. En effet, le fait de faire varier la profondeur de l'évidement permet une plus grande variation de la masse et de la position du centre de gravité des vis d'équilibrage, ce qui permet d'avoir plus de possibilités pour équilibrer le moteur, y compris lorsque ce moteur présente des dimensions réduites. On peut ainsi faire varier la masse des vis d'équilibrage sans faire varier leurs dimensions extérieures.

L'évidement des vis d'équilibrage de la deuxième sorte correspond à l'empreinte de serrage des vis d'équilibrage de la deuxième sorte. Ainsi, les vis d'équilibrage de la deuxième sorte présentent de préférence un évidement minimal, qui leur permet d'avoir une masse plus importante. Dans ce cas, l'évidement qui correspond à l'empreinte de serrage présente de préférence une forme adaptée à celle de la clé de serrage qui est destinée à être insérée dans l'empreinte de serrage. Selon un mode de réalisation :
- les vis d'équilibrage de la première sorte sont réalisées dans un matériau présentant une première masse volumique m1,
- les vis d'équilibrage de la deuxième sorte étant réalisées dans un matériau présentant une deuxième masse volumique m2, la deuxième masse volumique m2 étant strictement supérieure à la première masse volumique m1.

Le fait d'utiliser des matériaux différents pour les vis d'équilibrage permet d'avoir plus de possibilités pour équilibrer la pièce tournante, ce qui est avantageux dans le cas où la virole est de petites dimensions, et où les possibilités d'équilibrage par modifications des dimensions extérieures des vis d'équilibrage sont limitées.

Avantageusement, les vis d'équilibrage de la première sorte sont réalisées en titane. Avantageusement, les vis d'équilibrage de la deuxième sorte sont réalisées en acier. Selon un mode de réalisation :
- les vis de la première sorte présentent une première longueur l1 ;
- les vis de la deuxième sorte présentent une deuxième longueur l2, la deuxième longueur l2 étant strictement supérieure à la première longueur l1.

Ce qui permet encore d'augmenter la variation de masse entre les vis de la première sorte et les vis de la deuxième sorte.

Les vis d'équilibrages présentent de préférence des têtes de vis cylindriques, ce qui permet de faciliter la fabrication des vis d'équilibrage. En outre, dans le cas des vis d'équilibrage de la deuxième sorte, cela permet d'augmenter encore la masse de leur tête. Le fait d'augmenter la masse des têtes des vis de la deuxième sorte permet de déplacer leur centre de gravité vers la tête desdites vis, et donc de l'éloigner de l'axe moteur, ce qui permet d'augmenter la capacité d'équilibrage des vis.

Selon différents modes de réalisation :
- la tête de chaque vis d'équilibrage de la première sorte peut présenter une masse au moins égale à 60% de la masse totale de ladite vis d'équilibrage ; et/ou
- la tête de chaque vis d'équilibrage de la deuxième sorte peut présenter une masse au moins égale à 40% de la masse totale de ladite vis d'équilibrage.

Le fait d'avoir une tête relativement lourde par rapport au poids total de la vis permet de déplacer le centre de gravité des vis vers ladite tête, ce qui permet d'augmenter la capacité d'équilibrage des vis.

De manière plus générale, on peut utiliser des vis d'équilibrage avec des têtes de vis plus ou moins grandes pour compenser la longueur du corps de vis. Ainsi, lorsque l'espace est limité dans la virole et que par conséquent, la taille des corps de vis est limitée, on peut compenser la taille du corps des vis par celle des têtes de vis.

On peut envisager que toutes les vis d'équilibrage de la première sorte soit identiques entre elles de façon à simplifier la fabrication du dispositif d'équilibrage. Pour les mêmes raisons, on peut également envisager que toutes les vis d'équilibrage de la deuxième sorte soient identiques entre elles de façon à simplifier la fabrication du dispositif.

Dans ce cas, lorsque l'utilisation de deux groupes de vis d'équilibrage identiques à l'intérieur de chacun des groupes n'est pas suffisante pour compenser le balourd de la machine tournante, le dispositif d'équilibrage peut également comporter des vis d'équilibrage intermédiaires, chaque vis intermédiaire présentant une masse comprise entre la masse d'une des vis de la première sorte et la masse d'une des vis de la deuxième sorte. Ces vis d'équilibrages intermédiaires permettent de respecter tous les critères d'équilibrage et de réaliser des nuances dans l'équilibrage.

Les vis d'équilibrage intermédiaires peuvent par exemple être :
- des vis réalisées dans le même matériau et qui présentent les mêmes dimensions extérieures que les vis d'équilibrage de la première sorte, mais qui ne comportent pas d'évidement additionnel au-delà de leur empreinte de serrage ;
- des vis qui présentent des dimensions égales à celles des vis de la première sorte mais qui sont réalisées dans un matériau dont la masse volumique est supérieure à celle du matériau des vis de la première sorte ;
- des vis qui sont réalisées dans le même matériau que les vis de la première sorte mais qui présentent des dimensions inférieures...

On peut notamment faire varier les dimensions des têtes des vis de façon à équilibrer la pièce tournante.

Un deuxième aspect de l'invention concerne un procédé d'équilibrage d'une pièce tournante de turbomachine pourvue d'un dispositif d'équilibrage selon le premier aspect de l'invention, le procédé comportant une étape d'ajustement de la profondeur de l'évidement des têtes de vis de façon à équilibrer la pièce tournante. Avantageusement, le procédé d'équilibrage comporte en outre une étape d'ajustement d'un ou plusieurs des paramètres suivants pour équilibrer la pièce tournante :
- les dimensions extérieures de chacune des têtes de vis;
- la forme des têtes de vis ;
- le matériau des vis d'équilibrage.

La variation de la masse de chaque tête peut donc être utilisée qui compenser des variations de la masse du corps de vis. En effet, la masse du corps des vis est contrainte par l'espace disponible à l'intérieur de la virole. On peut donc utiliser les têtes de vis pour avoir plus de possibilités pour équilibrer la machine tournante.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une vue en coupe d'un capot d'entrée de turbomachine de l'art antérieur ;
- La figure 2, une vue en perspective d'un capot d'entrée de turbomachine selon un mode de réalisation de l'invention ;
- La figure 3, une vue en coupe du capot d'entrée de la figure 2 ;
- La figure 4, une vue en coupe agrandie d'une partie du capot d'entrée de la figure 2 ;
- La figure 5, une autre vue en coupe d'une partie du capot d'entrée de la figure 2 ;
- La figure 6, une autre vue en coupe d'une autre partie du capot d'entrée de la figure 2 ;
- La figure 7, une vue en coupe d'une des vis du capot d'entrée de la figure 2 ;
- La figure 8, une vue en coupe d'une autre vis du capot d'entrée de la figure 2.

Pour plus de clarté, les éléments identiques ou similaires sont repérés par des signes de références identiques sur l'ensemble des figures.

### DESCRIPTION DETAILLEE D'AU MOINS UN MODE DE REALISATION

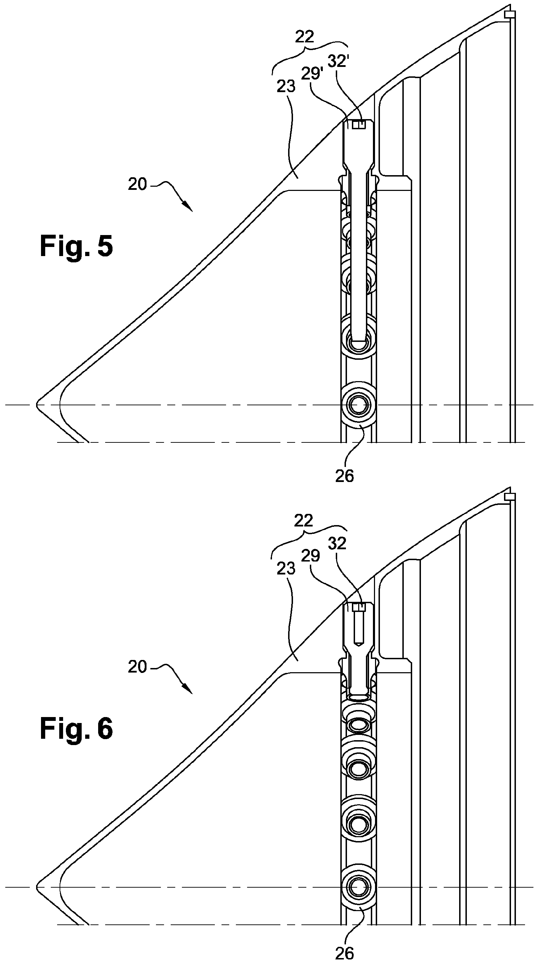

Les figures 2 et 4 à 6 représentent un capot d'entrée 20 de turbomachine comportant un dispositif d'équilibrage selon un mode de réalisation de l'invention.

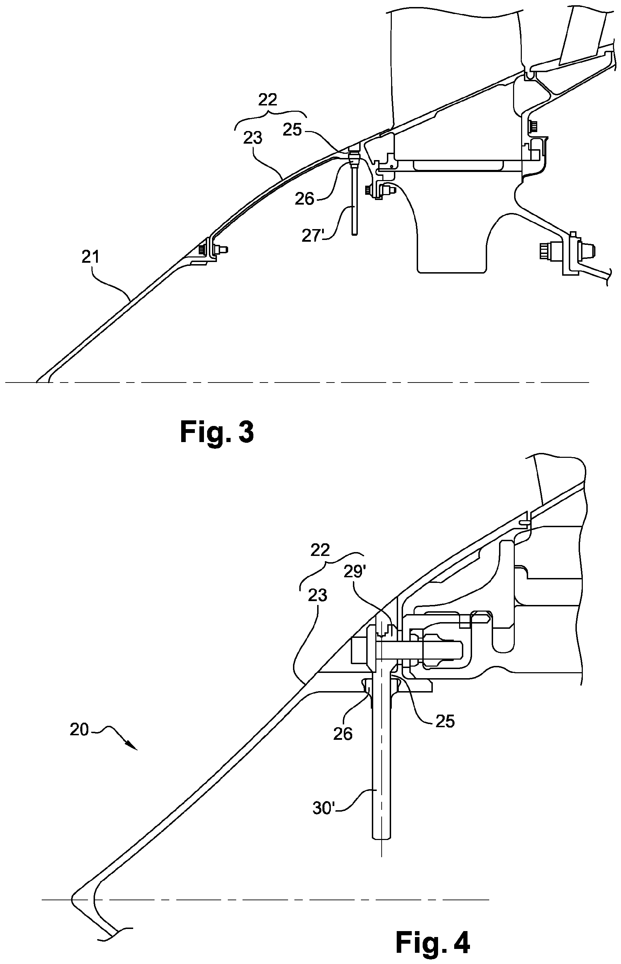

Ce capot d'entrée 20 comporte un cône 21 pourvu d'un dispositif d'équilibrage 22. Le dispositif d'équilibrage 22 comporte une virole 23. La virole 23 présente dans ce cas une forme conique. Dans ce mode de réalisation, la virole 23 est formée par une partie arrière du cône 21. Toutefois, dans le mode de réalisation de la figure 3, la virole 23 est formée par une pièce additionnelle 24 qui présente une symétrie de révolution et qui est relié au cône 21.

La virole 23 est percée par des orifices 25 qui sont répartis radialement sur l'ensemble du pourtour de la virole 23. Dans ce mode de réalisation, la virole 23 est percée par vingt orifices 25. Toutefois le nombre d'orifices dépend notamment du diamètre de la virole 23 et de la précision voulue pour l'équilibrage.

Le dispositif d'équilibrage comporte également des écrous 26, chaque écrou 26 étant serti dans un des orifices 25. Les écrous 26 sertis sont aptes à recevoir des vis dites d'équilibrage 27, 27' de façon à diminuer voir supprimer le balourd de la turbomachine.

Pour cela, des vis d'équilibrage 27 d'une première sorte sont tout d'abord insérées dans chacun des orifices 25 et vissées dans chacun des écrous.

La turbomachine est ensuite mise en rotation de façon à détecter la présence d'un éventuel balourd.

Si un balourd est détecté, certaines vis de la première sorte 27 sont alors remplacées par des vis d'équilibrage d'une deuxième sorte 27' de façon à diminuer le balourd. Les vis d'équilibrage de la première sorte 27 et de la deuxième sorte 27' sont réparties radialement autour de la virole de façon à diminuer le balourd de la turbomachine. Dans cet exemple de réalisation cinq vis de la première sorte 27 ont été remplacées par cinq vis de la deuxième sorte 27', toutefois, la répartition radiale et le nombre respectif des vis de la première sorte et de la deuxième sorte dépendent du balourd.

Les vis d'équilibrage dans la deuxième sorte 27' présentent une masse supérieure à celle des vis de la première sorte 27.

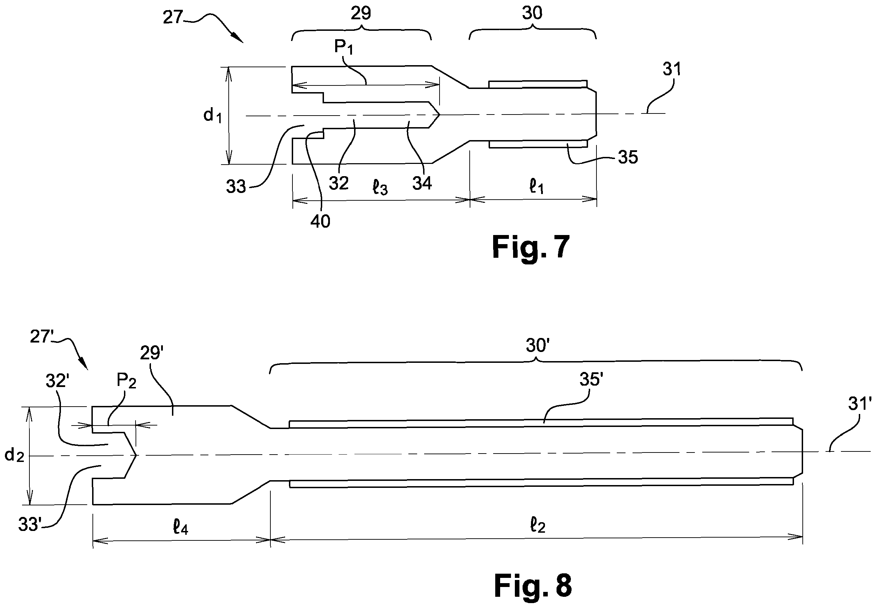

Une vis de la première sorte 27 est représentée plus précisément sur la figure 7.

La vis d'équilibrage de la première sorte 27 s'étend suivant un axe de référence 31. La vis d'équilibrage de la première sorte 27 est de préférence réalisée en titane. La vis d'équilibrage de la première sorte 27 comporte une tête 29 et un corps 30. Le corps 30 de la vis d'équilibrage de la première sorte 27 comporte sur sa surface extérieure un filetage 35 permettant de visser la vis d'équilibrage de la première sorte 27 dans l'écrou 26. Le corps 30 de la vis de la première sorte 27 présente une longueur l1 suffisante pour pouvoir être entièrement vissé dans l'écrou 26. Toutefois, la longueur l1 est de préférence choisie de façon à ce que le corps 30 ne dépasse pas trop de l'écrou 26 de façon à ne pas trop alourdir la turbomachine. La tête 29 de la vis de la première sorte est percée par un évidement 32. L'évidement 32 est formé par une empreinte de serrage 33 et par un évidement additionnel 34 situé dans le prolongement axial de l'empreinte de serrage 33. L'empreinte de serrage 33 présente un fond 40 qui est percé par l'évidement additionnel 34. L'empreinte de serrage 33 est apte à recevoir une clé de serrage permettant de visser la vis dans l'écrou 26 correspondant. Pour cela, l'empreinte de serrage 33 présente de préférence une section hexagonale. L'évidement additionnel 34 présente de préférence une forme cylindrique de façon à faciliter son usinage. Par ailleurs, il présente de préférence des dimensions transversales par rapport à l'axe de référence 31 inférieures à celles de l'empreinte de serrage 33 de sorte qu'une clé de serrage insérée dans l'empreinte de serrage 33 vienne en butée contre le fond 40, à la limite entre l'empreinte de serrage 33 et l'évidement additionnel 34. La profondeur p1 de l'évidement 32 est ajustée en fonction de la masse voulue pour la vis et plus précisément pour la tête de cette vis. De la même manière, les dimensions transversales de l'évidement additionnel peuvent être ajustées en fonction de la masse voulue pour la vis et plus précisément pour la tête de la vis. La tête 29 est de préférence cylindrique pour faciliter sa fabrication.

Les dimensions des vis de la première sorte 27 peuvent être modifiées en fonction de la masse qu'elles doivent avoir pour équilibrer la turbomachine. Ainsi, on peut tout d'abord modifier la longueur l1 du corps 30 des vis de la première sorte 27. On peut également modifier la masse de la tête 29 pour obtenir l'équilibrage voulu. Pour cela, on peut notamment modifier les dimensions d1 de la tête 29, et notamment sa hauteur l3. Selon l'invention, on modifie la profondeur p1 de l'évidement 32. On peut également modifier sa forme. On peut également envisager de modifier la forme de la tête 29.

Une vis de la deuxième sorte 27' est représentée plus précisément sur la figure 8. Les vis d'équilibrage de la deuxième sorte 27' sont substituées à certaines des vis d'équilibrage de la première sorte 27 de façon à diminuer le balourd de la turbomachine.

La vis d'équilibrage de la deuxième sorte 27' est de préférence réalisée en acier. La vis d'équilibrage de la deuxième sorte 27' s'étend également suivant un axe de référence 31' et elle présente également une tête 29' et un corps 30'. Le corps 30' de la vis d'équilibrage de la deuxième sorte 27' comporte également sur sa surface extérieure un filetage 35' permettant de visser la vis d'équilibrage de la deuxième sorte 27' dans l'écrou 26. Le corps 30' présente de préférence une longueur l2 supérieure à la longueur l1 du corps 30 de la vis d'équilibrage de la première sorte 27. La tête 29' est percée par un évidement 32'. L'évidement 32' est formé dans cet exemple de réalisation par une empreinte de serrage 33'. Dans ce mode de réalisation, l'évidement 32' ne se prolonge pas au-delà de l'empreinte de serrage 33'. Par conséquent, selon l'invention, la profondeur p2 de l'évidement 32' correspond à la profondeur de l'empreinte de serrage 33'. La profondeur p2 est donc inférieure à la profondeur p1. L'évidement 32' de la vis d'équilibrage de la deuxième sorte 27' est donc minimal dans ce mode de réalisation de façon à maximiser la masse des têtes et donc la capacité d'équilibrage de la vis. De même, la tête est de préférence cylindrique de façon à maximiser sa masse.

Les dimensions des vis de la deuxième sorte 27' peuvent être modifiées en fonction de la masse qu'elles doivent avoir pour équilibrer la turbomachine. Ainsi, on peut tout d'abord modifier la longueur l2 du corps 30' des vis de la deuxième sorte 27'. Toutefois, cette longueur l2 est limitée par l'espace à l'intérieur de la virole. Par conséquent, il est avantageux de modifier la masse de la tête 29' pour obtenir l'équilibrage voulu. Pour cela, on peut notamment modifier les dimensions d2 de la tête 29', et notamment sa hauteur l4. Selon l'invention, on modifie la profondeur p2 de l'évidement 32'. On peut également modifier sa forme. On peut également envisager de modifier la forme de la tête 29'.

Par ailleurs, dans cet exemple de réalisation, toutes les vis d'équilibrage de la première sorte 27 étaient identiques entre elles, de même que toutes les vis d'équilibrage de la deuxième sorte 27' étant identiques entre elles. Toutefois, on pourrait également envisager d'utiliser des vis d'équilibrage de la première sorte 27 différentes entre elles et/ou des vis d'équilibrage de la deuxième sorte 27' différentes entre elles.

Par ailleurs, si l'utilisation de deux sortes de vis n'est pas suffisante pour équilibrer le balourd de la turbomachine, et en fonction de la précision voulue pour l'équilibrage, on peut utiliser des vis intermédiaires, présentant une masse comprise entre les vis de la première sorte 27 et les vis de la deuxième sorte 27'.

Naturellement, l'invention n'est pas limitée aux modes de réalisation décrits en référence aux figures et des variantes peuvent être envisagées sans sortir du cadre de l'invention tel que défini par l'énoncé des revendications. On peut ainsi modifier la répartition radiale des vis en fonction du balourd à équilibrer. On peut également utiliser d'autres matériaux pour réaliser les vis d'équilibrage.

## Revendications

1. Dispositif d'équilibrage (22) pour une pièce tournante (20) de turbomachine, comportant une virole (23) percée par une pluralité d'orifices (25), chaque orifice (25) étant traversé par une vis d'équilibrage (27, 27'), les vis d'équilibrage étant d'au moins une première et une deuxième sortes, les vis d'équilibrage de la deuxième sorte (27') et de la première sorte (27) étant réparties radialement autour de la virole (23) de façon à équilibrer la pièce tournante (20), les vis d'équilibrage de la première et deuxième sortes comportant un corps (30, 30') et une tête (29, 29'), la tête (29, 29') de chaque vis d'équilibrage étant percée par un évidement (32, 32'), l'évidement (32) étant formé par
une empreinte de serrage (33) et par un évidement additionnel (34), l'empreinte de serrage (33) présentant un fond (40), le fond (40) de l'empreinte de serrage (33) étant percé par l'évidement additionnel (34),
**caractérisé en ce que** l'évidement (32) des vis de la première sorte (27) présente une première profondeur p1, et que l'évidement des vis de la deuxième sorte (27') présente une deuxième profondeur p2, la deuxième profondeur p2 étant strictement inférieure à la première profondeur p1.

2. Dispositif d'équilibrage selon la revendication précédente, dans lequel :
- les vis d'équilibrage de la première sorte (27) sont réalisées dans un matériau présentant une première masse volumique m1, et
- les vis d'équilibrage de la deuxième sorte (27') sont réalisées dans un matériau présentant une deuxième masse volumique m2, la deuxième masse volumique m2 étant strictement supérieure à la première masse volumique m1.

3. Dispositif d'équilibrage (22) selon la revendication précédente, dans lequel :
- les vis d'équilibrage de la première sorte (27) sont réalisées en titane; et
- les vis d'équilibrage de la deuxième sorte (27') sont réalisées en acier.

4. Dispositif d'équilibrage selon l'une des revendications 2 à 3, dans lequel:
- les vis de la première sorte (27) présentent une première longueur l1 ; et
- les vis de la deuxième sorte (27') présentent une deuxième longueur l2, la deuxième longueur l2 étant strictement supérieure à la première longueur l1.

5. Dispositif d'équilibrage selon l'une des revendications précédentes, dans lequel les vis d'équilibrages (27, 27') présentent des têtes (29'), les têtes desdites vis d'équilibrages (27, 27') étant cylindriques.

6. Dispositif d'équilibrage selon l'une des revendications précédentes, dans lequel :
- la tête (29) de chaque vis d'équilibrage de la première sorte (27) présente une masse au moins égale à 60% de la masse totale de ladite vis d'équilibrage (27); et/ou
- la tête (29') de chaque vis d'équilibrage de la deuxième sorte (27') présente une masse au moins égale à 40% de la masse totale de ladite vis d'équilibrage (27').

7. Dispositif d'équilibrage (22) selon l'une des revendications précédentes, comportant en outre des vis d'équilibrage additionnelles, chaque vis additionnelle présentant une masse comprise entre la masse d'une des vis de la première sorte (27) et la masse d'une des vis de la deuxième sorte (27').

8. Procédé d'équilibrage d'une pièce tournante (20) de turbomachine pourvue d'un dispositif d'équilibrage (22) selon l'une des revendications précédentes, le procédé comportant une étape d'ajustement de la profondeur de l'évidement (32, 32') de façon à équilibrer la pièce tournante (20).

9. Procédé d'équilibrage selon la revendication précédente, comportant en outre une étape d'ajustement d'un ou plusieurs des paramètres suivants pour équilibrer la pièce tournante (20):
- les dimensions extérieures (d1, l3, d2, l4) de chacune des têtes (29, 29');
- la forme des têtes de vis (29, 29') ; et
- le matériau des vis d'équilibrage (27, 27').

## Patentansprüche

1. Auswuchtvorrichtung (22) für ein drehendes Teil (20) einer Turbomaschine, unter Einschluss einer Hülse (23), die mit einer Vielzahl von Öffnungen (25) durchbohrt ist, wobei eine Auswuchtschraube (27, 27') durch jede Öffnung (25) hindurchtritt, wobei die Auswuchtschrauben (27, 27') wenigstens von einem ersten und einem zweiten Typ sind, wobei die Auswuchtschrauben vom zweiten Type (27') und vom ersten Typ (27) radial um die Hülse (23) derart angeordnet sind, dass das drehende Teil (20) ausgewuchtet wird, wobei die Auswuchtschrauben des ersten und des zweiten Typs einen Körper (30, 30') und einen Kopf (29, 29') enthalten, wobei der Kopf (29, 29') jeder Auswuchtschraube mit einer Ausnehmung (32, 32') durchbohrt ist, wobei die Ausnehmung (32) durch eine Antriebsausnehmung (33) und durch eine zusätzliche Ausnehmung (34) gebildet sind, wobei die Antriebsausnehmung (33) einen Boden (40) aufweist, wobei der Boden (40) der Antriebsausnehmung (33) mit einer zusätzlichen Ausnehmung (34) durchbohrt ist, **dadurch gekennzeichnet, dass** die Ausnehmung (32) der Schrauben vom ersten Typ (27) eine erste Tiefe p1 aufweist und die Ausnehmung der Schrauben vom zweiten Typ (27') eine zweite Tiefe p2 aufweist, wobei die zweite Tiefe p2 strikt tiefer ist als die erste Tiefe p1.

2. Auswuchtvorrichtung nach dem voranstehenden Anspruch, wobei:
- die Auswuchtschrauben vom ersten Typ (27) aus einem Material mit einer ersten Dichte m1 hergestellt sind und
- die Auswuchtschrauben vom zweiten Typ (27') aus einem Material mit einer zweiten Dichte m2 hergestellt sind, wobei die zweite Dichte m2 strikt höher ist als die erste Dichte m1.

3. Auswuchtvorrichtung (22) nach dem voranstehenden Anspruch, wobei:
- die Auswuchtschrauben vom ersten Typ (27) aus Titan hergestellt sind und;
- die Auswuchtschrauben vom zweiten Typ (27) aus Stahl hergestellt sind.

4. Auswuchtvorrichtung nach einem der Ansprüche 2 bis 3, wobei:
- die Schrauben vom ersten Typ (27) eine erste Länge l1 aufweisen und;
- die Auswuchtschrauben vom zweiten Typ (27') eine zweite Länge l2 aufweisen, wobei die zweite Länge l2 strikt höher ist als die erste Länge l1.

5. Auswuchtvorrichtung nach einem der voranstehenden Ansprüche, wobei die Auswuchtschrauben (27, 27') zylindrische Schraubenköpfe (29') aufweisen.

6. Auswuchtvorrichtung nach einem der voranstehenden Ansprüche, wobei:
- der Kopf (29) jeder Auswuchtschraube vom ersten Typ (27) eine Masse von wenigstens gleich 60 % der Gesamtmasse der genannten Auswuchtschraube (27) aufweist; und/oder
- der Kopf (29) jeder Auswuchtschraube vom zweiten Typ (27') eine Masse von wenigstens gleich 40 % der Gesamtmasse der genannten Auswuchtschraube (27) aufweist.

7. Auswuchtvorrichtung (22) nach einem der voranstehenden Ansprüche, die weiterhin zusätzliche Auswuchtschrauben enthält, wobei jede zusätzliche Auswuchtschraube eine Masse zwischen der Masse einer der Schrauben vom ersten Typ (27) und der Masse einer der Schrauben vom zweiten Typ (27') aufweist.

8. Verfahren zum Auswuchten eines drehenden Teils (20) einer Turbomaschine, das mit der Auswuchtvorrichtung (22) nach einem der voranstehenden Ansprüche bereitgestellt wird, wobei das Verfahren einen Schritt zum Anpassen der Tiefe der Ausnehmung (32, 32) derart umfasst, dass das drehende Teil (20) ausgewuchtet wird.

9. Verfahren zum Auswuchten nach dem voranstehenden Anspruch, das weiterhin einen Schritt zum Anpassen von einem oder mehreren der folgenden Parameter zum Auswuchten des drehenden Teils (20) enthält:
- die externen Abmessungen (d1, l3, d2, l4) jedes Kopfes (20, 29');
- die Form der Schraubenköpfe (29, 29') und:
- das Material der Auswuchtschrauben (27, 27').

## Claims

1. A balancing device (22) for a rotating part (20) of a turbomachine, including a ferrule (23) pierced with a plurality of ports (25), a balancing screw (27, 27') passing through each port (25), the balancing screws are at least of a first and a second type, the balancing screws of the second type (27') and of the first type (27) being radially distributed around the ferrule (23) so as to balance the rotating part (20), the balancing screws of the first and second type includes a body (30, 30') and a head (29, 29'), the head (29, 29') of each balancing screw being pierced with a recess (32, 32'), the recess (32) being formed by a driving recess (33) and by an additional recess (34), the driving recess (33) having a bottom (40), the bottom (40) of the driving recess (33) being pierced with the additional recess (34), **characterised in that** the recess (32) of the screws of the first type (27) having a first depth p1, and the recess of the screws of the second type (27') having a second depth p2, the second depth p2 being strictly lower than the first depth p1.

2. The balancing device according to the preceding claim, wherein:
- the balancing screws of the first type (27) are made of a material having a first density m1 and,
- the balancing screws of the second type (27') are made of a material having a second density m2, the second density m2 being strictly higher than first density m1.

3. The balancing device (22) according to the preceding claim, wherein:
- the balancing screws of the first type (27) are made of titanium, and;
- the balancing screws of the second type (27') are made of steel.

4. The balancing device according to claims 2 or 3, wherein:
- the screws of the first type (27) have a first length l1, and;
- the screws of the second type (27') have a second length l2, second length l2 being strictly higher than first length l1.

5. The balancing device according to one of the preceding claims, wherein the balancing screws (27, 27') have cylindrical screw heads (29').

6. The balancing device according to one of preceding claims, wherein:
- the head (29) of each balancing screw of the first type (27) has a mass at least equal to 60% of the total mass of said balancing screw (27); and/or
- the head (29) of each balancing screw of the second type (27') has a mass at least equal to 40% of the total mass of said balancing screw (27).

7. The balancing device (22) according to one of the preceding claims, further including additional balancing screws, each additional screw having a mass between the mass of one of the screws of the first type (27) and the mass of one of the screws of the second type (27').

8. A method for balancing a rotating part (20) of a turbomachine provided with the balancing device (22) according to one of the preceding claims, the method including a step of adjusting the depth of the recess (32, 32') so as to balance the rotating part (20).

9. The balancing method according to the preceding claim, further including a step of adjusting one or more of the following parameters to balance the rotating part (20):
- the external dimensions (d1, l3, d2, l4) of each of the heads (20, 29');
- the shape of the screw heads (29, 29'), and;
- the material of the balancing screws (27, 27').
